# EUROPÄISCHE PATENTANMELDUNG

(11) **EP 3 708 362 A1**
(43) Veröffentlichungstag der Anmeldung: **16.09.2020**
(21) Anmeldenummer: 19162304.0
(22) Anmeldetag: 12.03.2019
(51) Int. Cl.: B32B 27/30, B32B 9/00, B32B 9/04, B32B 13/12, B32B 27/14, B32B 27/20, C08J 5/04, C08L 27/06, C08L 97/02

(54) **KOMPOSIT, VERFAHREN ZUR HERSTELLUNG DESSELBEN UND VERWENDUNG DES KOMPOSITS**

(71) Anmelder: Münchener Boulevard Möbel GmbH, 83539 Forsting (DE)
(72) Erfinder: Die Erfindernennung liegt noch nicht vor
(74) Vertreter: Grünecker Patent- und Rechtsanwälte PartG mbB

(57) **Zusammenfassung**

Die Erfindung betrifft ein Komposit, umfassend folgende Schichten: eine anorganische Schicht, eine organische Schicht, umfassend PVC-Harz und Reis- und/oder Erdnussschalenpulver, eine dazwischenliegende Haftvermittlerschicht. Weiter betrifft die Erfindung ein Verfahren zur Herstellung eines Komposits, umfassend einen Schritt des Verbindens einer anorganischen Schicht und einer organischen Schicht, umfassend PVC-Harz und Reis- und/oder Erdnussschalenpulver, und einer dazwischenliegenden Haftvermittlerschicht.

## Beschreibung

Die vorliegende Erfindung betrifft ein Komposit, umfassend die folgenden Schichten: eine anorganische Schicht, eine organische Schicht, umfassend PVC- Harz und Reis- und/oder Erdnussschalenpulver, und eine dazwischenliegende Haftvermittlerschicht. Weiter betrifft die Erfindung auf ein Verfahren zur Herstellung des Komposits und die Verwendung des Komposits.

### Stand der Technik

Im Stand der Technik sind Zusammensetzungen bekannt, die PVC-Harze und Reis- und/oder Erdnussschalenpulver umfassen, und die z.B. zur Herstellung von Holzimitaten verwendet werden. Diese Zusammensetzungen wurden insbesondere als Ersatz für herkömmliche Holz-Plastik-Komposite (d.h. Wood-Plastic-Composite "WPC") bzw. für HPL-Materialien ("High-Pressure-Komposit") entwickelt. Solche PVC-Harz und Reis- und/oder Erdnussschalenpulver Zusammensetzungen sind zum Beispiel in der EP 3392296 A1 oder der WO 2011/100995 A1 offenbart.

Diese Zusammensetzungen können insbesondere als Plattenelemente mit Holz-Laminatfurnier und Kunststoffsubstrat ausgestaltet sein, wie z.B. in der DE 202013007235 U1 beschrieben wird. Weiter sind Dielenprofile bekannt, bei denen Laminate aus Holzimitat und Kunststoff- oder Metallsubstraten verwendet werden. Solche Materialien sind z.B. in der DE 202013009548 U1 offenbart. Laminate aus Holzimitat und Kunststoff oder Metall haben insbesondere bei Außenanwendungen aber den Nachteil, dass deren Lebensdauer durch Witterungseinflüsse wie Regen oder Schnee, sowie hohe Temperaturdifferenzen ungenügend ist. Weiter ist die mechanische Stabilität dieser Laminate oft nicht ausreichend.

Auch sind in der DE 102009006701 A1 und WO 2016/135525 A1 Komposite mit Stein- oder Keramiksubstraten erwähnt. Diese bekannten Komposite werden in einer spezifischen Art und Weise aufgebaut, nämlich durch die Aufbringung einer Schicht aus Latex und pulverisiertem Stein, optional umfassend weiter PVC und weitere organische Stoffe. Erforderlich ist also die Verwendung einer speziellen Latexzusammensetzung, was die Herstellung aufwändiger macht. Zusätzlich sind die erhaltenen Komposite ungenügend im Hinblick auf eine gute Haftung zwischen dem Holzimitat und dem Substrat auf und zeigen deswegen insbesondere bei Außenanwendungen unter dem Einfluss von großen Temperaturunterschieden und Wasser, wie Regen oder Schnee, eine ungenügende Lebensdauer.

### Aufgabe der Erfindung

Aus diesen Gründen besteht weiterhin Bedarf an Kompositen auf der Basis von Holzimitaten, die eine hohe mechanische Stabilität und gute Witterungsbeständigkeit aufweisen und somit insbesondere bei Außenanwendungen eine hohe Lebensdauer besitzen.

Somit liegt der Erfindung die Aufgabe zugrunde, Komposite und Verfahren zu deren Herstellung bereitzustellen, die eine Holzimitatschicht umfassen, die eine hohe mechanische Stabilität und gute Witterungsbeständigkeit aufweisen und insbesondere für Außenanwendungen geeignet sind, da sie eine hohe Lebensdauer unter diesen Bedingungen besitzen.

### Kurze Beschreibung der Erfindung

Diese Aufgabe wird durch das Komposit nach Anspruch 1 gelöst. Bevorzugte Ausführungsformen des Komposits sind in den Unteransprüchen 2 bis 9 beschrieben. Zusätzlich wird die Aufgabe durch das Verfahren gemäß den Anspruch 10 gelöst. Bevorzugte Ausführungsformen des Verfahrens sind in den Unteransprüchen 11 bis 14 beschrieben. Weiter wird die Aufgabe durch die Verwendung nach Anspruch 15 gelöst. Eine Kombination der bevorzugten Ausführungsformen, die in den Unteransprüchen sowie in der Beschreibung offenbart sind, ist erfindungsgemäß umfasst.

Zusätzliche Ausgestaltungen ergeben sich aus der nachfolgenden detaillierten Beschreibung. Diese beschreibt die vorliegende Erfindung besonders im Zusammenhang mit dem erfindungsgemäßen Komposit. Die dort als bevorzugt beschriebenen Ausführungsformen gelten aber auch für das erfindungsgemäße Verfahren, und für die beanspruchte Verwendung.

### Detaillierte Beschreibung der Erfindung

Das erfindungsgemäße Komposit umfasst die folgenden Schichten: eine anorganische Schicht, eine organische Schicht, sowie eine dazwischenliegende Haftvermittlerschicht. Die Zusammensetzung der organischen Schicht umfasst ein PVC-Harz und Reis- und/oder Erdnussschalenpulver.

Die anorganische Schicht und die organische Schicht des Komposits besitzen eine gute Haftung zueinander aufgrund der Anwesenheit der dazwischenliegenden Haftvermittlerschicht. Die organische Schicht umfasst ein PVC-Harz und Reis- und/oder Erdnussschalenpulver, und kann deswegen als Holzimitat ausgestaltet werden. Die anorganische Schicht wird im Folgenden auch als Substrat bezeichnet und verleiht dem Komposit eine hohe mechanische Festigkeit, die insbesondere höher ist als bei der Verwendung von Kunststoffsubstraten. Diese Kombination an Eigenschaften ermöglicht es, dass das erfindungsgemäße Komposit insbesondere für Außenanwendungen eingesetzt werden kann, da es eine hohe Witterungsbeständigkeit aufweist.

Die Art der anorganischen Schicht kann aus einem breiten Spektrum gewählt werden. Bevorzugt ist die anorganische Schicht ausgewählt aus der Gruppe umfassend Beton, insbesondere Leichtbeton, Porenbeton, Epoxy-Beton; Stein, insbesondere Fliesen-, Terrazzo-, Naturwerkstein-Feinsteinzeug , und Betonwerkstein; Mauerwerk; Zement; Gips; Gipskarton- und Gipsfaserplatten; Gipsdielen; Faserzementplatten; zementgebundene Holzspanplatten; Keramik; oder Mischungen davon. Somit ist eine hohe mechanische Stabilität des Substrats und damit des gesamten Komposits gewährleistet. Bevorzugt ist die anorganische Schicht ausgewählt aus Beton und/oder Stein. Die Verwendung von Beton und/oder Stein als anorganischen Schicht im Komposit bedingt eine besonders bevorzugte mechanische Stabilität und Witterungsbeständigkeit.

Verfahren zur Herstellung erfindungsgemäßer anorganischer Schichten sind hinlänglich bekannt und werden hier nicht weiter erläutert. Insbesondere ist bekannt und erfindungsgemäß umfasst, dass sich anorganischer Schichten, wie z.B. aus Beton, zum Teil aus flüssigen Precursoren herstellen lassen, die nach Härten eine anorganische Schicht bilden. Der Begriff "Precursor der anorganischen Schicht" bedeutet erfindungsgemäß ein Vorläufer der anorganischen Schicht, der bei Raumtemperatur von 23 °C in flüssigem Zustand vorliegt. Das Härten der anorganischen Schicht erfolgt gemäß herkömmlicher Verfahren.

Die Schichtdicke der anorganischen Schicht ist erfindungsgemäß nicht eschränkt. Bevorzugte Ausführungsformen des Komposits besitzen eine anorganische Schicht mit einer Schichtdicke im Bereich von 1 mm bis 25 cm, bevorzugt 1 cm bis 10 cm.

Die organische Schicht umfasst PVC-Harz und Reis- und/oder Erdnussschalenpulver. Bevorzugt ist dabei Reisschalenpulver. Entsprechende Zusammensetzungen sind im Stand der Technik bekannt und sind insbesondere als Holzimitate geeignet. Geeignete Zusammensetzungen sind beispielsweise in der Europäischen Patentanmeldung EP 2 536 785 offenbart und hier durch Verweis mit umfasst.

In Ausführungsformen umfasst die organische Schicht 20 - 60 Gew.-% PVC-Harz und 10 - 50 Gew.-% Reis- und/oder Erdnussschalenpulver, bezogen auf die Gesamtmenge der organischen Schicht.

In bevorzugten Ausführungsformen umfasst die organische Schicht 38 - 60 Gew.-%, bevorzugt 40 - 58 Gew.-%, mehr bevorzugt 49 - 55 Gew.-% PVC-Harz, bezogen auf die Gesamtmenge der organischen Schicht.

Für das PVC-Harz gibt es keine besonderen Einschränkungen. Insbesondere kann PVC-Neumaterial oder PVC-Recyclingmaterial, bzw. Mischungen davon verwendet werden. Beispielsweise eignet sich eine PVC-Harz-Suspension mit einem K-Wert von 50 - 70. Unter dem K-Wert versteht man eine Zahl, die aus Messungen der Viskosität verdünnter Lösungen eines Polymers berechnet wird und die ein Maß für den Polymerisationsgrad bzw. die Molekülgröße ist. Der K-Wert wird als Harz-Spezifikation verwendet. Der Begriff PVC-Harz bezieht sich auf Homopolymere von Vinylchlorid und auf Copolymere, die durch Polymerisation von Vinylchlorid mit einem oder mehreren Comonomeren, wie z.B. Ethylen, Propylen oder Vinylacetat gebildet werden.

In Ausführungsformen kann die organische Schicht 15 - 32 Gew.-%, bevorzugt 17 - 30 Gew.-%, mehr bevorzugt 20 - 25 Gew.-% Reis- und/oder Erdnussschalenpulver umfassen.

Die vorstehend für die beiden Komponenten PVC und Reis- und/oder Erdnussschalenpulver genannten Mengenbereiche können je nachgewünschtem Einsatzzweck oder Eigenschaftsprofil miteinander kombiniert werden, also beispielsweise 30 bis 65 Gew.-% PVC und 20 bis 25 Gew.-% Reisschalenpulver, etc.

In Ausführungsformen ist das Gewichtsverhältnis des PVC-Harzes und des Reisschalenpulvers 1:1 bis 3,5:1 bevorzugt 1,5:1 bis 3:1,5, mehr bevorzugt 2:1 bis 2,5:1. Durch dieses Gewichtsverhältnis lassen sich gute Mischbarkeiten der Einzelkomponenten (auch mit den nachfolgend beschriebenen zusätzlichen Komponenten), d.h. eine besonders gute Homogenität der resultierenden Zusammensetzungen und Formteile, gewährleisten.

Die verwendeten Reis- und/oder Erdnussschalen unterliegen keinen besonderen Einschränkungen, insbesondere nicht in Bezug auf bestimmte Reissorten bzw. Erdnusssorten. In einer bevorzugten Ausführungsform wird das Schalenmaterial über ein herkömmliches Mahlverfahren pulverisiert, gefolgt, soweit notwendig von Siebverfahren zur Gewinnung einzelnen Fraktionen an Partikelgrößen. Das erfindungsgemäß einzusetzende Reis- und/oder Erdnussschalenpulver besitzt insbesondere eine Partikelgröße von 0,42 - 0,10 mm (40 - 140 mesh). Die Partikelgröße wird durch ein Siebverfahren bestimmt, bei dem eine Siebvorrichtung der Firma Filtra, Model "Iris FTL-0200" verwendet wird (Geräteeinstellungen: Power: 5; Cycle: 0, Timer: 10 min.). Die Probemenge ist 100g, genommen mindestens ca. 20 cm von der Oberfläche des Gebindes entfernt. Die Messung wird 3 Mal wiederholt. Das Ergebnis entspricht dem arithmetischen Mittel der drei Messwerte. Die Bezeichnung "mesh" bezeichnet die Maschenweite der Siebe gemäß "US Standard Sieve". Je kleiner der mesh-Wert, desto größer ist die Partikelgröße. Die Partikel des Reis- und/oder Erdnussschalenpulvers können sphärisch oder asphärisch sein. Das Pulver kann vor dem Einsatz in der erfindungsgemäßen Zusammensetzung oberflächenbehandelt werden, um eine gute Mischbarkeit mit dem PVC-Harz zu gewährleisten. Insbesondere ist bevorzugt, dass das Reis- und/oder Erdnussschalenpulver mit Silan- oder Siloxangruppen oberflächenfunktionalisiert ist. Somit wird eine besonders gute Haftung zum PVC-Harz gewährleistet.

In Ausführungsformen umfasst die organische Schicht einen oder mehrere anorganische Füllstoffe. Die anorganischen Füllstoffe sind bevorzugt ausgewählt aus der Gruppe, umfassend Kalziumcarbonat, Talk, Glimmer, Tonerde, Kaolin, Silikat oder Titanoxid, oder Mischungen davon. Insbesondere ist Kalziumcarbonat bevorzugt. Bevorzugt sind die anorganischen Füllstoffe in 0 - 30 Gew.-%, weiter bevorzugt in 5 - 25 Gew.-%, mehr bevorzugt in 10 - 20 Gew.-%, bezogen auf die Gesamtmenge der organischen Schicht, enthalten.

Die organische Schicht enthält in Ausführungsformen ein oder mehrere Additive, ggf. zusätzlich zu den anorganischen Füllstoffen. Diese Additive sind bevorzugt ausgewählt aus der Gruppe, umfassend polymere Binder, bevorzugt auf Thermoplastkunststoffbasis, Farbstoffe und/ oder Pigmente, Gleit/Schmiermittel, PVC-Verarbeitungsmittel, wie Weichmacher, Schaumbildner, UV-Stabilisatoren, thermische Stabilisatoren, Brandschutzmittel, oder Mischungen davon. Die Additive sind bevorzugt in 0 - 30 Gew.-%, weiter bevorzugt in 5 - 25 Gew.-%, mehr bevorzugt in 10 - 20 Gew.-%, bezogen auf die Gesamtmenge der organischen Schicht, enthalten.

Der polymere Binder besitzt beispielsweise die Funktion, Feuchtigkeit oder Lösungsmittel zu binden. Bevorzugt werden Polymere aus Acrylaten und/oder Methacrylaten verwendet. Farbpigmente sind z.B. Kreide, Titandioxid, Rußschwarz, rotes Eisenoxid oder Ocker. Schmier/Gleitmittel sind z.B. Fettsäuresalze wie Calciumstearat, Fettsäureester, Fettsäureamide, Paraffinwachse, Polyethylenwachse oder mikrokristallines Parafin. PVC-Verarbeitungsmittel (wie z.B. Wärme- und Witterungsstabilisatoren, Antioxidantien, Alterungsschutzmittel, Lichtstabilisatoren, Ultraviolettabsorber, Antistatikmittel) sind dem Fachmann bekannt und im Handel in großer Auswahl verfügbar. Insbesondere werden z.B. Polyethylen oder chloriertes Polyethylen als PVC Weichmacher verwendet. Als Schaumbildner (bzw. Aufschäumer) können herkömmliche Schaumbildner eingesetzt werden, die keinen besonderen Beschränkungen unterliegen. Insbesondere sind chemische oder physikalische Schaumbildner einsetzbar. Physikalische Schaumbildner sind z.B. Tenside oder andere grenzflächenaktive Stoffe, die neben der Grenzflächenaktivität auch ein gewisses Filmbildungsvermögen besitzen, und so die Bildung von Schaumflüssigkeiten durch Einblasen von Gas fördern. Bei chemischen Schaumbildnern beruht die Schaumbildung auf einer chemischen Reaktion, die unter Gasentwicklung abläuft. Beispiele sind Polyurethan-basierte Schaumbildner oder azobasierte Schaumbildner. Die zuzusetzende Menge ergibt sich aus den Herstellerinstruktionen und wird vom Fachmann durch einfache Routineversuche bestimmt. Durch die Menge des Schaumbildners kann die resultierende Dichte des geschäumten Werkstoffs eingestellt werden.

Der chemische Binder auf Thermoplastkunststoffbasis hat beispielsweise die Funktion, Feuchtigkeit oder Lösungsmittel von Naturstofffasern zu entfernen und verbindet bzw. vernetzt sich stark mit dem "nonwoven web" bzw. Netzwerk aus Naturstofffasern. PVC-Verarbeitungshilfsmittel ("PVC processing aids") können die Verschmelzung ("Fusion") beschleunigen, die Schmelzstärke bzw. Zähigkeit der Schmelze ("melt strength") verbessern, Oberflächendefekte eliminieren und das "place out" verringern. Außerdem können sie im Produktionsprozess die Metallablösungseigenschaften verstärken. Geeignete Binder und Verarbeitungshilfsmittel sind dem Fachmann auf dem Gebiet der PVC-Verarbeitung geläufig und im Handel in großer Auswahl verfügbar.

Für brandhemmende organische Schichten werden in bevorzugten Ausführungsformen z.B. 10 - 20 Gew.-% Al₂O₃, 5 - 10 Gew.-% Sb₂O₃ und 0,1 - 5% Zinkborat als Additive zugesetzt.

Für geschäumte Platten oder Profile werden in bevorzugten Ausführungsformen z.B. 0,1 - 5 Gew.-% Schaumbildner, 5 - 10 Gew.-% Gleitmittel und 5 - 15% Acrylate als Additive zugesetzt. Bevorzugte Ausführungsformen für Platten, Profile, die Impact-modifiziert sind, und die über Co-Extrusion oder Spritzguss hergestellt werden, können weiter 1 - 10 Gew.-% Gleitmittel und 5 - 15 Gew.-% Acrylate beinhalten.

In einer Ausführungsform umfasst die organische Schicht ausschließlich das PVC-Harz als polymere Komponente, d.h. es sind außer dem PVC-Harz keine weiteren polymeren Komponenten wie z.B. polymere Binder vorhanden. Damit wird u.a. eine hohe mechanische Festigkeit des resultierenden Komposits erreicht.

Die Schichtdicke der organischen Schicht ist erfindungsgemäß nicht beschränkt. Bevorzugte Ausführungsformen des Komposits besitzen eine organische Schicht mit einer Schichtdicke im Bereich von 0,1 mm bis 10 cm, bevorzugt 1 mm bis 1 cm.

Verfahren zur Herstellung erfindungsgemäßer organischer Schichten (d.h. der Holzimitatschicht) sind allgemein bekannt und unterliegen keinen besonderen Beschränkungen. Herstellungsverfahren umfassen erfindungsgemäß bevorzugt Schäumen, Laminieren, (Co)-Extrudieren, Kalandrieren, Spritzgießen, 3D-Drucken oder Thermoformen. Für dreidimensionale Ausgestaltungen der organischen Schicht ist Thermoformen bevorzugt.

Beim Durchführen der Herstellungsverfahren erfindungsgemäßer organischer Schichten wird beispielsweise das PVC-Pulver in einem Mischer mit Reis- und/oder Erdnussschalenpulver und optional Füllstoff/Additiv (ggf. bei höheren Temperaturen von z.B. 125 - 140°C) vermischt. Nach Abkühlen wir das Gemisch bei einer Temperatur im Bereich von beispielsweise 150 - 210°C oder 160 - 175°C geformt. Dabei kann ggf. während oder nach dem Herstellungsverfahren erfindungsgemäßer organischer Schichten durch Zugabe eines Schaumbildners ein geschäumtes Produkt hergestellt werden.

In einer Ausführungsform erfolgt nach der Herstellung der erfindungsgemäßen organischen Schicht (oder nach Herstellung des Komposits mit der anorganischen Schicht) eine Oberflächenbehandlung, bevorzugt durch Abbürsten, Abschleifen, Aufrauen, Sandstrahlen, Lackieren, Ölen Lasieren, Bedrucken oder Mischungen davon.

Dabei wird durch das Abbürsten, Abschleifen, Aufrauen oder Sandstrahlen insbesondere die auf der Oberfläche der Schicht gebildete Kunststoffhaut entfernt, wodurch gute ästhetische Oberflächeneigenschaften, wie z.B. eine holzähnliche Haptik und Optik entsteht. Durch die Entfernung der Kunststoffhaut haben die erfindungsgemäßen Schichten auch eine gute Griff- bzw. Rutschfestigkeit.

Beispielsweise kann die Kunststoffhaut durch Abschleifen entfernt werden. Das Abschleifen kann z.B. mit einem Schleifmaterial wie Sand oder Schleifpapier mit einer Körnung im Bereich von 24 bis 60 durchgeführt werden, beispielsweise unter Verwendung eines elektrisch betriebenen Handschleifers. Bei der Körnung entspricht ein kleinerer Zahlenwert einer gröberen Körnung und ein höherer Zahlenwert einer feineren Körnung. Eine Körnung von 24 ist eher grob und eignet sich z.B. zum Entfernen von Leim- oder Lackschichten, während eine Körnung von 60 eher mittel ist und beispielsweise zum groben Vorschleifen roher Holzflächen verwendet wird. Die geeignete Körnung wählt der Fachmann nach Maßgabe der praktischen Gegebenheiten bzw. des zu erzielenden Effekts.

Die erfindungsgemäßen organischen Schichten können auf ihrer nach außen gerichteten Oberfläche, ggf. nach einer entsprechenden Vorbehandlung (z.B. Grundierung), bedruckt, lackiert, lasiert oder geölt werden, insbesondere aufgrund der polaren Eigenschaften des verwendeten PVC-Harzes. Die polaren Eigenschaften erlauben auch eine leichte Verklebbarkeit und verleihen antistatische Eigenschaften. Im Gegensatz dazu sind konventionelle Holz/PE-Composite (WPCs) sind wegen der nichtpolaren Eigenschaften von PE nicht oder nur sehr schwer lackierbar, nicht verklebbar und nicht antistatisch.

Durch ihre Stabilität, Formbeständigkeit und absolute Widerstandsfähigkeit gegenüber Feuchtigkeitseinflüssen wie Regen sind die erfindungsgemäßen organischen Schichten den konventionellen Holz/PE-Kompositionen (WPCs) und auch vielen Holzarten überlegen. Die erfindungsgemäßen organischen Schichten sind nahezu wasserdicht. Das verwendete PVC ist nicht hygroskopisch und nimmt kein Wasser auf und verhindert so das Eindringen von Wasser durch eine Verletzung der Oberfläche, so dass keine Unterwanderung von aufgetragenen Lackschichten erfolgt und keine Lackabplatzungen auftreten. Die erfindungsgemäßen organischen Schichten sind daher auch dimensionsstabil, so dass eine Verformung auf natürlichem Wege (z.B. durch Aufquellen oder Schwinden) nicht möglich ist. Konventionelle Holz/PE-Composite quellen dagegen unter Feuchtigkeitseinfluss. Lacke haften nicht mehr, weil das eindringende Wasser diese unterwandert und dadurch ablöst.

Der Farbton der erfindungsgemäßen organischen Schichten kann durch Ölen, Bedrucken, Lackieren oder Lasieren eingestellt werden. Je nach Pigmentierung und Oberflächentönung lassen sich verschiedene Holzoptiken und -haptiken realisieren, z.B. von Tropenholz wie Burma Teak, Siam Teak, Java Teak oder Aged Teak.

Das Material für die Haftvermittlerschicht kann aus einem breiten Spektrum gewählt werden, d.h. es können alle Arten von Haftvermittlern verwendet werden, die geeignet sind, eine gute Haftung zwischen der anorganischen Schicht und der organischen Schicht zu gewährleisten.

Insbesondere ist bevorzugt, dass die Haftvermittlerschicht ausgewählt ist aus der Gruppe der Reaktionsharzklebestoffe, z.B. auf der Basis von Urethanen, Epoxiden oder Acrylaten. Dadurch lässt sich eine besonders gute Verbindung zwischen der anorganischen Schicht und der organischen Schicht gewährleisten. Die Reaktionsharzklebestoffe können ein- oder zweikomponentige Systeme sein, die ungehärtet in Lösung oder lösungsmittelfrei vorliegen können. Dabei wird bei der Applikation insbesondere ein flüssiger Precursor der Haftvermittlerschicht verwendet. Als flüssiger Precursor der Haftvermittlerschicht wir ein Vorläufer des Haftvermittlers bezeichnet, der bei Raumtemperatur von 23 °C flüssig ist, gelöst ist oder dispergiert ist, und nach Härten bzw. Trocknen die Haftvermittlerschicht bildet. Das Härten bzw. Trocknen der Haftvermittlerschicht erfolgt je nach chemischer Natur der Haftvermittlerschicht entweder über Verdampfen des Lösungsmittels, thermisches Härten oder durch chemische Vernetzung (wie z.B. radikalische oder photoinitierte Vernetzung).

Insbesondere bevorzugt sind Polyurethankleber, wie zweikomponentige, lösungsmittelfreie Polyurethan-Kleber. Diese sind besonders geeignet eine gute Verbindung zwischen Holzimitatwerkstoffen und anorganischen Materialien, wie insbesondere Beton und Steinmaterialien zu gewährleisten. Weiter besitzen sie eine hohe Flexibilität Klebekraft und Witterungsbeständigkeit und können deswegen in Außenbereichen verwendet werden. Insbesondere geeignet ist der Polyurethan-Kleber "Sopro PUK 503" von Sopro Bauchemie GmbH, Wiesbaden, Deutschland. Die Auftragung des Haftvermittlers erfolgt mit herkömmlichen Verfahren, z.B. durch Gießen, Rakeln oder Aufspritzen.

In einer bevorzugten Ausführungsform umfasst das Komposit weiter eine Grundierung zwischen der anorganischen Schicht und der Haftvermittlerschicht. Diese Grundierung wird vor der Auftragung der Haftvermittlerschicht auf das anorganische Substrat appliziert. Es hat sich gezeigt, dass durch die Aufbringung einer Grundierung die Probleme der Delaminierung (d.h. Verlust der Haftung zwischen organischer und anorganischer Schicht, trotz Anwesenheit einer Haftvermittlersichicht) vermieden werden können, die insbesondere bei Beton und Steinsubstraten zu beobachten sind. Überraschend hat es sich gezeigt, dass durch die Aufbringung einer Grundierung eine Schwächung der Haftvermittlerschicht vermieden werden kann.

Die Natur der Grundierung ist erfindungsgemäß nicht beschränkt. Bevorzugt ist es aber bei Verwendung von Polyurethan-Klebern als Haftvermittler eine Epoxy-Grundierung zu verwenden. Epoxy-Grundierungen umfassen bevorzugt ein lösungsmittelfreies, zweikomponentiges Epoxyharz. Insbesondere wird bei der Verwendung von Sopro PU-Kleber PUK 503 eine Epoxy-Grundierung (wie Sopro EPG 522 von Sopro Bauchemie GmbH, Wiesbaden, Deutschland) verwendet, die mit Quarzsand (wie Sopro- Quarzsand QS 511 von Sopro Bauchemie GmbH, Wiesbaden, Deutschland) abgesandet wird.

Das Komposit kann weitere Komponenten oder Bauteile (wie zusätzliche Schichten, Verstärkungselemente, Rohre, Kabel etc.) umfassen. Das Komposit wird durch einen Formgebungsprozess, insbesondere bereits bei seiner Herstellung, in eine gewünschte geometrische Form gebracht. Die geometrische Ausgestaltung des Komposits wie Form, Schichtdicken, Größe, etc., ist erfindungsgemäß nicht eingeschränkt. Die gewünschte Form kann bereits vor dem Zusammenfügen der einzelnen Schichten des Komposits dadurch bestimmt werden, dass z.B. die organische Schicht und/oder die anorganische Schicht während des Herstellungsverfahrens eine bestimmte Form erhalten. Auch ist es aber erfindungsgemäß umfasst, dass der Formgebungsprozess zumindest zum Teil nach der Herstellung des Komposits stattfindet, wie zum Beispiel durch Schleifen oder Sägen.

In einer Ausführungsform besitzt das Komposit die Form einer Platte oder eines Flachprofils. Bevorzugt ist dabei eine Ausführungsform, bei der die anorganische Schicht zumindest an einer Hauptseite mit einer organischen Schicht bedeckt ist, die denselben Grundriss wie die anorganischen Schicht aufweist. Erfindungsgemäß ist weiter umfasst, dass die organische Schicht eine, zwei, drei, vier oder mehrere der Seiten der Platte oder des Flachprofils bedeckt. Die mit der organischen Schicht bedeckten Seiten sind dabei insbesondere die Seiten der Platte oder des Flachprofils, die zur Außenseite zeigen, d.h. mit der Außenumgebung in Kontakt sind. Besonders bevorzugt dabei ist, dass die organische Schicht zumindest eine der Hauptseiten der Platte oder des Flachprofils bedeckt.

In einer alternativen Ausführungsform besitzt das Komposit einen Hohlraum oder eine Vertiefung. Dabei ist der Hohlraum oder die Vertiefung durch eine Wanne oder ein Profil aus der organischen Schicht gebildet und mit der anorganischen Schicht gefüllt. Das Formteil umfasst dabei bevorzugt eine dreidimensionale, insbesondere thermogeformte organische Schicht.

Insbesondere ist es für diese alternative Ausführungsform bevorzugt, dass das Komposit aus der organischen Schicht, der Haftvermittlerschicht und der organischen Schicht besteht, wobei die organische Schicht Epoxy-Beton ist. Epoxy-Beton ist ein Beton-Spezialtyp, der Epoxidharz und Quarzsand umfasst. Bei dieser Ausführungsform hat es sich gezeigt, dass zwischen der anorganischen Schicht und der organischen Schicht lediglich die Haftvermittlerschicht vorliegen muss, um eine sehr gute Haftung zu erreichen, d.h. es ist keine Grundierung notwendig. Gemäß dieser Ausführungsform ist es möglich, auf die Grundierung zu verzichten Weiter schwindet Epoxy-Beton beim Trocknungsprozess nicht. Dies ermöglicht also dir Füllung von Hohlformen, die auch komplexer gestaltet sein könne, da der Epoxy-Beton eine ausreichende Fließfähigkeit hat um auch derartige komplexere Formen zu füllen. Somit kann auch ohne die Grundierung eine hervorragende Haftung der organischen und der anorganischen Schicht bereitgestellt werden. Auch weist Epoxy-Beton eine hervorragende Biegefestigkeit und Zugfestigkeit im Vergleich zu herkömmlichem Beton auf. Deswegen sind die mechanischen Eigenschaften eines solchen Komposits ausgezeichnet.

Das Verfahren zur Herstellung des Komposits ist erfindungsgemäß nicht eingeschränkt und umfasst im Wesentlichen den Schritt des Verbindens einer anorganischen Schicht und einer organischen Schicht, sowie einer dazwischenliegenden Haftvermittlerschicht. Verbinden im Sinne der vorliegenden Erfindung bedeutet allgemein das Zusammenfügen der einzelnen Schichten des Komposits, das wie unten beschrieben auf mehrere unterschiedliche bevorzugte Art und Weisen erfolgen kann. Dies kann in einem oder in mehreren Einzelschritten (bzw. Unterschritten) erfolgen. Dabei sind sowohl Verfahren umfasst, bei denen die Herstellung der anorganischen Schicht im Vorfeld separat erfolgt, als auch Verfahren bei denen deren Herstellung der anorganischen Schicht, z.B. über Precursoren in situ während der Herstellung des Komposits erfolgt. Das Verbinden ist in Ausführungsformen ein Laminieren, das unter Aufbringen von Druck wie z.B. Verpressen erfolgt. In Ausführungsformen ist aber auch ein Laminieren ohne Aufbringen von Druck umfasst.

Insbesondere ist bevorzugt, dass das Verfahren zur Herstellung des Komposits weiter den vorhergehenden Schritt des Beschichtens der anorganischen Schicht mit einer Grundierung umfasst. Durch die Aufbringung der Grundierung kann die Haftung der anorganischen Schicht und der organischen Schicht erhöht werden. Insbesondere wird bei dieser Verfahrensausgestaltung eine Grundierung aufgebracht, die ein oben beschriebenes lösungsmittelfreies, zweikomponentiges Epoxy-Harz und Quarzsand umfasst. Somit kann eine besonders gute Haftung und lange Lebensdauer gewährleistet werden.

In Bezug auf bevorzugte Verfahren zur Herstellung des erfindungsgemäßes Komposits werden die zwei untenstehenden alternativen Verfahren unterschieden:

Ein erstes alternatives Verfahren zur Herstellung eines Formteils wird bevorzugt erfindungsgemäß verwendet, wenn das Komposit die Form einer Platte, eines Flachprofils oder einer Folie besitzt. Dann umfasst das Verfahren die folgenden Schritte: Bereitstellen eines festen Substrats aus der anorganischen Schicht in der Form einer Platte, eines Flachprofils oder einer Folie, Beschichten von zumindest einem Teil des festen Substrats mit einem flüssigen Precursor der Haftvermittlungsschicht, sowie Härten der Haftvermittlerschicht, und Anbringen der organischen Schicht.

Durch solch ein Verfahren lassen sich effizient und kostengünstig Komposite herstellen, die die Form einer Platte oder eines Flachprofils besitzen.

Insbesondere bevorzugt ist dabei, dass auch die organische Schicht die Form einer Platte oder eines Flachprofils besitzt, wobei diese insbesondere bevorzugt demselben Grundriss wie das feste Substrat aus der anorganischen Schicht aufweist. So lassen sich Formteile sehr effektiv und in großer Stückzahl anfertigen.

Ein zweites alternatives Verfahren zur Herstellung des Komposits wird bevorzugt dann verwendet, wenn das Komposit eine dreidimensionale Form mit einem Hohlraum oder einer Vertiefung besitzt, wobei der Hohlraum oder die Vertiefung durch eine Wanne oder ein Profil aus der organischen Schicht gebildet ist und mit der organischen Schicht befüllt ist. Das erfindungsgemäße Verfahren gemäß dieser Alternative umfasst dabei die Schritte: zumindest zum Teil Beschichten der innenliegenden Oberfläche des Hohlraums oder der Vertiefung mit einem flüssigen Precursor der Haftvermittlerschicht oder einer Lösung davon, sowie Härten der Haftvermittlerschicht. Danach erfolgt das Befüllen des Hohlraums oder der Vertiefung mit flüssigem Precursor der anorganischen Schicht, sowie Härten der anorganischen Schicht. Bei diesem Verfahren ist die anorganische Schicht insbesondere Epoxy-Beton. So kann ggf. die Grundierung weggelassen werden.

Der flüssige Precursor der anorganischen Schicht lässt sich leicht in den Hohlraum oder die Vertiefung der dreidimensionalen Form des organischen Substrats einbringen. Der Vorteil dieser Verfahrensausgestaltung ist, dass sich, insbesondere unter der Verwendung von anorganischen Schichten, die keiner oder nur geringer Schrumpfung unterliegen, dass der Precursor der anorganischen Schicht direkt in die Form gegossen werden kann, und sich anschließend dauerhaft verklebt. Dies hat den Vorteil, dass sich eine Vielzahl von dreidimensionalen Formteilen leicht und effizient herstellen lässt. Weiter können in dieser Ausführungsform zum Beispiel vor dem Zugeben des flüssigen Precursors der anorganischen Schicht weitere Bauteile (die wie oben beschrieben erfindungsgemäß umfasst sind) in den Hohlraum oder die Vertiefung des dreidimensionalen Formteils eingegeben werden, und so leicht in das Komposit integriert werden.

Die Verwendung des erfindungsgemäßen Komposits ist zum Beispiel als Holzimitat, Parkettersatz, Plattenwerkstoff, Baumaterial, Fußbodenmaterial, Wandmaterial, oder Deckenmaterial, insbesondere im Außenbereich, für Treppen, Schwimmbäder, Schwellen, Furniere, Fensterflügel, Türen, Schindeln, Verkleidungen, Fassaden, Zäune, Möbel, Fahrzeuge, oder im maritimen Bereich gegeben.

## Patentansprüche

1. Komposit, umfassend folgende Schichten:
eine anorganische Schicht,
eine organische Schicht, umfassend PVC-Harz und Reis- und/oder Erdnussschalenpulver,
eine dazwischenliegende Haftvermittlerschicht.

2. Das Komposit nach Anspruch 1, wobei die anorganische Schicht ausgewählt aus der Gruppe umfassend Beton, insbesondere Leichtbeton, Porenbeton, Epoxy-Beton; Stein, insbesondere Fliesen-, Terrazzo-, Naturwerkstein-, Feinsteinzeug und Betonwerkstein; Mauerwerk; Zement; Gips; Gipskarton- und Gipsfaserplatten; Gipsdielen; Faserzementplatten; zementgebundene Holzspanplatten; Keramik; oder Mischungen davon, bevorzugt Beton und/oder Stein.

3. Das Komposit nach Anspruch 1 oder 2, wobei die organische Schicht 20 - 60 Gew.-% PVC-Harz und 10 - 50 Gew.-% Reis- und/oder Erdnussschalenpulver umfasst.

4. Das Komposit nach einem der Ansprüche 1 bis 3, wobei der Haftvermittler ausgewählt ist aus der Gruppe der Reaktionsharzklebstoffe, insbesondere Polyurethan-Kleber, wie zweikomponentige, lösungsmittelfreie Polyurethan-Kleber.

5. Das Komposit nach einem der Ansprüche 1 bis 4, weiter umfassend eine Grundierung zwischen der anorganischen Schicht und der Haftvermittlerschicht, insbesondere eine Grundierung, umfassend ein lösungsmittelfreies, zweikomponentiges Epoxidharz und Quarzsand.

6. Das Komposit nach einem der Ansprüche 1 bis 5, wobei das Komposit die Form einer Platte oder eines Flachprofils besitzt.

7. Das Komposit nach Anspruch 6, wobei die die anorganische Schicht zumindest an einer Hautseite mit einer organischen Schicht bedeckt ist, die denselben Grundriss wie die anorganischen Schicht aufweist.

8. Das Komposit nach einem der Ansprüche 1 bis 5, wobei das Komposit eine dreidimensionale Form mit einem Hohlraum oder einer Vertiefung besitzt, wobei der Hohlraum oder die Vertiefung durch eine Wanne oder ein Profil aus der organischen Schicht gebildet ist und mit der anorganischen Schicht befüllt ist.

9. Das Komposit nach Anspruch 8, wobei das Komposit aus der anorganischen Schicht, der Haftvermittlerschicht und der organischen Schicht besteht, und wobei die anorganische Schicht Epoxy-Beton ist.

10. Verfahren zur Herstellung eines Komposits, umfassend einen Schritt des Verbindens einer anorganischen Schicht und einer organischen Schicht, umfassend PVC-Harz und Reis- und/oder Erdnussschalenpulver, und einer dazwischenliegenden Haftvermittlerschicht.

11. Das Verfahren zur Herstellung eines Komposits nach Anspruch 10, weiter umfassend den vorhergehenden Schritt des Beschichtens der anorganischen Schicht mit einer Grundierung, insbesondere einer Grundierung, umfassend ein lösungsmittelfreies, zweikomponentiges Epoxidharz und Quarzsand.

12. Das Verfahren zur Herstellung eines Komposits nach Anspruch 10 oder 11, wobei das Komposit die Form einer Platte oder eines Flachprofils besitzt, und wobei das Verfahren die folgenden Schritte umfasst:
Bereitstellen eines festen Substrats aus der anorganischen Schicht in der Form einer Platte oder eines Flachprofils,
Beschichten von zumindest einem Teil des festen Substrats mit einem Precursor einer flüssigen Haftvermittlerschicht, sowie Härten der Haftvermittlerschicht,
Anbringen der organischen Schicht.

13. Das Verfahren zur Herstellung eines Komposits nach Anspruch 12, wobei die organische Schicht die Form einer Platte oder eines Flachprofils besitzt, und bevorzugt denselben Grundriss wie das feste Substrat aus der anorganischen Schicht aufweist.

14. Das Verfahren zur Herstellung eines Komposit nach Anspruch 10, wobei das Komposit eine dreidimensionale Form mit einem Hohlraum oder einer Vertiefung besitzt, wobei der Hohlraum oder die Vertiefung durch eine Wanne oder ein Profil aus der organischen Schicht gebildet ist und mit der anorganischen Schicht befüllt ist, und wobei das Verfahren die Schritte umfasst:
zumindest zum Teil Beschichten der innenliegenden Oberfläche des Hohlraums oder der Vertiefung mit einem flüssigen Precursor der Haftvermittlerschicht oder einer Lösung davon, sowie Härten der Haftvermittlerschicht, und
Befüllen des Hohlraums oder der Vertiefung mit flüssigem Precursor der anorganischen Schicht sowie Härten der anorganischen Schicht, wobei die anorganische Schicht insbesondere Epoxy-Beton ist.

15. Verwendung eines Komposits nach einem der Ansprüche 1 bis 9 als Holzimitat, Parkettersatz, Plattenwerkstoff, Baumaterial, Fußbodenmaterial, Wandmaterial, oder Deckenmaterial, insbesondere im Außenbereich, für Treppen, Schwimmbäder, Schwellen, Furniere, Fensterflügel, Türen, Schindeln, Verkleidungen, Fassaden, Zäune, Möbel oder im maritimen Bereich.
